# EUROPEAN PATENT SPECIFICATION

(11) **EP 2 192 471 B1**
(45) Date of publication and mention of the grant of the patent: **31.07.2019**
(21) Application number: 10001515.5
(22) Date of filing: 10.05.2006
(51) Int. Cl.: G06F 3/033, H04M 1/247

(54) **Improved graphical user interface for mobile communications terminal**
Verbesserte graphische Benutzerschnittstelle für ein mobiles Kommunikationsendgerät
Interface utilisateur graphique améliorée pour terminal de communication mobile

(30) Priority: 27.05.2005 US 140549
(43) Date of publication of application: 02.06.2010
(62) Divisional of application: 06744680.7
(73) Proprietor: Nokia Technologies Oy, 02610 Espoo (FI)
(72) Inventor: Hämäläinen, Seppo O., 02140 Espoo (FI); Wang, Kongqiao, Tong Zhou Beijing 101117 (CN); Tao, Rong, 310004 Hangzhou City (CN)
(74) Representative: Swindell & Pearson Limited

(56) References cited:
- EP-A2- 1 148 412
- EP-A2- 1 566 752
- US-A1- 2005 091 596

## Description

### Field of the Invention

The present invention relates to mobile telecommunication and more particularly to a mobile terminal with a graphical user interface, and an associated method and computer program product.

### Background of the Invention

A mobile (cellular) telephone for a telecommunications system like GSM, UMTS, D-AMPS or CDMA2000 is a common example of a mobile terminal according to the above. For many years, the external hardware components of the user interface of mobile telephones were limited to a small monochrome display, an alpha-numeric (ITU-T) keypad, a speaker and a microphone. The mobile terminals of those times were predominantly used for speech communication (telephone calls), and therefore the software part of the user interface was typically simple and character-based.

As the field of mobile telecommunications has evolved, the mobile terminals have been provided with various features, services and functions in addition to conventional speech communication: contacts/phonebook, calendar, electronic messaging, video games, still image capture, video recording, audio (music) playback, etc. This expansion or broadening of the usability of mobile terminals required a structured approach as regards the manner in which the user interface allows the user to control and interact with these features and services. For terminals with a mainly character-based user interface, such structured approach often involved presenting a hierarchical structure of selectable user interface (UI) items arranged in a text-based menu system. Thus, the various features, services and functions were represented by different selectable menu options arranged at different hierarchical levels.

Navigating in such a text-based menu system is sometimes both inconvenient and non-intuitive, particularly if the menu system is large, the input device is rudimentary (simple alpha-numeric keypad), the display is small/monochrome and the language of the menu system is a foreign one. In addition to this, the spreading of mobile telecommunication systems and mobile terminals to developing countries and emerging markets has brought about new user categories, such as non-western users and illiterate or semi-illiterate users. To summarize the above, a text-based menu system clearly has its shortcomings.

More sophisticated graphical user interfaces have been developed in recent years, typically involving a larger, high-resolution color display and a multi-way input device such as a joystick or a 4/5-way navigation key. Such graphical user interfaces are based on graphical objects, icons and display screen layouts, combined with some degree of character use, such as explanatory text, menu headers, button labels, etc. The advent of graphical user interfaces has led to a trend to present more and more information on the display. However, this is in conflict with another trend, namely strong market demands for miniaturized mobile terminals. A small overall apparatus size of the mobile terminals also restricts the size of the display. Therefore, available display area on the display screen of the display has been a limited resource and is expected to remain so also in the future.

US 2005/0091596 discloses an apparatus according to the preamble of claim 1. This apparatus divides a plurality of user interface times into a plurality of ordered groups. Then the appratus presents a plurality such groups along a predefined path on the display with one group in a focus area. The groups that are not in the focus area are shown in a size that is smaller than the size that the group in the focus area is shown.

EP 1 148 412 discloses an apparatus for managing data object. This appratus presents a plurality of thumbnails along a predefined path on the display with one thumbnail in a focus area. The thumbnails that are not in the focus area overlap so none of the thumbnails outside the focus area is completely visible.

WO 2004/023283 discloses a graphical user interface system for a device such as an interactive television set-up box, a hand-held computer or a mobile terminal. A scrollable menu of selectable menu items is shown on the display screen in the form of a series of panels, or icons, along an essentially semi-circular path. Each panel or icon represents a respective selectable menu item (referred to in WO 2004/023283 as a bookmark or a bookmark folder, as the case may be). The user can scroll between different panels by pressing left and right arrow keys. In response to this, a cursor which focuses on a currently "highlighted" panel is shifted accordingly. When the cursor has been shifted a certain number of positions in one of the scrolling directions, the entire series of panels are shifted in the opposite direction, so that the focused panel is repositioned at a centered location at the bottom of the semi-circular path. A focused panel is selected, or, more precisely, the menu item represented by that panel is selected, by pressing a dedicated selection key such as Enter.

In one embodiment, the menu is hierarchical, i.e. each panel on the uppermost level represents either a menu item "leaf" which upon selection triggers some action in the device, or a menu item "node" in the form of a selectable folder which in itself may contain sub-folders and/or menu item "leafs" on lower level(s). The user moves between different levels in this hierarchical menu by way of up and down arrow keys. All panels (provided that they fit within the available display area) are shown for the current level in the menu system, and furthermore the parent panel (but only that) of a currently focused panel is shown.

An advantage of providing the selectable panels along a curved path rather than in a one or two dimensional linear structure is that it allows a larger number of objects to fit withing the available area on the display screen. Moreover, it is believed to be a representation which is generally intuitive and user-friendly. However, the present inventors have identified a number of shortcomings for WO 2004/023283.

Firstly, the solution proposed in WO 2004/023283 relies solely on each panel itself to provide information about the particulars of the selectable menu item represented by that panel. In other words, the graphical information contained within the iconized panel will have to be as intuitive and extensive as possible, so that the user will clearly understand which menu item it represents by merely studying its graphical appearance (e.g. interpreting a symbol or trying to read a small text squeezed into the limited area of the panel). Thus, there is an apparent risk that the user may fail to understand the real meaning of a particular panel by accidentally misinterpreting its graphical appearance.

Secondly, the present inventors have realized that the solution proposed in WO 2004/023283 does not make optimal use of the available display area.

Thirdly, the information provided as regards the whereabouts of a focused panel and the menu item it represents, in terms of its position in the hierarchical menu system, is indicated only in a very limited way (immediately preceding menu system level only, parent item only). Thus, the user is given no overall impression of the total menu system, nor will he fully understand where the currently focused menu item is positioned in the total menu system.

Similar, but simpler, graphical user interfaces with menu item icons along a curved path are disclosed in US-6,411,307 and WO 02/39712.

### Summary of the Invention

In view of the above, an objective of the invention is to solve or at least reduce the problems discussed above. This is generally achieved by the attached independent patent claims.

According to various, but not necessarily all, embodiments of the invention there is provided an apparatus, a method and a computer program product according to the appended claims.

According to various, but not necessarily all, examples there is provided a graphical user interface for providing access for a user of an electronic apparatus to a multi-level structure of selectable user interface items, the electronic apparatus having a display and an input device, the graphical user interface involving:
a focused region on said display;
an unfocused region on said display; and
a descriptor region on said display, wherein
the focused region is adapted for presentment of a first plurality of user interface items belonging to a current level in said multi-level structure, the focused region having a focus area for focusing on any desired one of said first plurality of user interface items in response to user input on said input device,
the unfocused region is adapted for presentment of a second plurality of user interface items belonging to at least one level superior to said current level in said multi-level structure, and
the descriptor region is adapted for presentment of descriptive information about a currently focused user interface item in said focus area.

The selectable user interface items may represent various functionality available to a user of the electronic device, including but not limited to selection of actions or functions to be performed in various software applications in the electronic device, or controlling different settings or parameters in the electronic device. The multi-level structure is, in examples, advantageously hierarchical, i.e. it is a structure of nodes and leaves at different levels starting from a top or root level.

In such a case, certain selectable user interface items may instead represent folders or catalogs in the multi-level structure. Such a folder or catalog thus functions as a node (in contrast to a leaf) in the multi-level structure which upon selection does not invoke any actions or functions other than moving to an adjacent level in the multi-level structure. In such a hierarchical structure, the user interface items presented in the focused region are preferably the ones that are children of a certain parental node, and the user interface items presented in the unfocused region preferably include this parental node together with other nodes at the same level as the parental node.

The user interface items may be presented as image objects on said display. Such image objects may be in the form of graphical icons, symbols, thumbnails, pictures, photographs, panels, bookmarks or any other kind of predefined visual information presentable in monochrome, grey scale or color in a limited area on the display.

The currently focused user interface item is, in examples, advantageously presented in front view inside said focus area, whereas user interface items other than the focused one among said first plurality of user interface items are, in examples, presented in perspective views outside of said focus area and inside said focused region. This optimizes the use of available display area on the display.

Use of the available display area on the display may be further optimized by presenting the user interface items of said first plurality of user interface items inside the focused region along a predefined path which follows a non-linear (i.e., curved) geometrical curve, such as an arc, a circle or an ellipse, or a segment thereof. The user interface items of said first plurality are preferably arranged in a sequential order along the predefined path. Still more user interface items may be fitted within the focused region at one and the same time by arranging them along two, three or even more predefined paths on the display. Such paths may or may not be interconnected to each other depending on implementation. If two paths are interconnected, an item which is scrolled beyond an end point of a first path may be scrolled onto a second path at a start point thereof, and vice versa.

There may be more user interface items available (i.e., belonging to the current level) than can be included in said first plurality. In such a case, as one item is scrolled beyond one end point (or start point) of the predefined path and consequently disappears from the display, a hitherto not presented item may appear at an opposite start point (or end point) of the predefined path, in a scrolling manner which is familiar per se.

The user interface items of said second plurality of user interface items may be presented in a visually reduced form in said unfocused region compared to said first plurality of user interface items in said focused region. A visually reduced form may e.g. be a smaller image size, a lower image quality (in terms of e.g. image resolution or color depth), or presentation with only a part of the image area visible.

It is to be observed that in some cases, the unfocused region may be empty, meaning that no user interface items are currently presented therein. This may particularly be the case when the currently focused level in the focused region is the top-level in the multi-level structure. Naturally, there are no superior levels to such a top-level and therefore nothing to present in the unfocused region.

The unfocused region may be adapted for presentment of said second plurality of user interface items belonging to at least two successive levels superior to said current level in said multi-level structure. User interface items belonging to a first one of said at least two successive levels may be presented along a first rectilinear path, and user interface items belonging to a second one of said at least two successive levels may be presented along a second rectilinear path, parallel to said first rectilinear path.

In examples, the descriptive information presented in the descriptor region includes first information serving to explain a functionality of the focused user interface item to be performed upon selection.

The descriptive information may further include second information serving to indicate a hierarchical position of the focused user interface item in the multi-level structure.

Advantageously, the unfocused region occupies, in examples, an upper part of a display area of the display, the focused region occupies a center part of the display area, below said upper part, and the descriptor region occupies a lower part of the display area, below said center part.

The user interface items of said first plurality of user interface items may be scrollable in either a first or a second direction along a predefined path inside said focused region in response to user input on said input device which indicates one of said first and second directions as a desired scrolling direction. The input device may comprise a multi-way input device such as a 4/5-way navigation key or a joystick, wherein a first-way actuation (e.g. navigate-left operation) of the multi-way input device indicates the first direction, and a second-way actuation (e.g. navigate-right operation) of the multi-way input device indicates the second direction.

The focus area in the focused region may be advantageously fixed, i.e. has a static position on said display, a currently focused user interface item being moved out from said focus area and a neighboring user interface item being moved into said focus area as the user interface items of said first plurality of user interface items are scrolled one step in said desired scrolling direction along said predefined path. This is beneficial, since a more static display screen is less tiring and more intuitive to a user.

Aforesaid predefined path may be symmetrical around at least one symmetry axis, and said static position of said focus area on said display may be located at an intersection of said path and said symmetry axis.

The graphical user interface may be advantageously capable of shifting from a formerly current level to a new level, immediately subordinate to said formerly current level, in said multi-level structure in response to user input on said input device, wherein the focused region may be adapted to replace said first plurality of user interface items belonging to said formerly current level with a third plurality of user interface items belonging to said new level for presentment, and wherein the unfocused region is adapted to include said first plurality of user interface items in said second plurality of user interface items for presentment. This allows convenient navigation downwards in the multi-level structure and may be commanded by performing a selecting operation or navigate-down operation on a multi-way input device such as a 4/5-way navigation key or a joystick.

When the unfocused region is adapted for presentment of user interface items belonging to at least two successive levels in said multi-level structure, the unfocused region may furthermore be adapted to remove user interface items from an uppermost one of said at least two successive levels in said multi-level structure when including said first plurality of user interface items in said second plurality of user interface items for presentment.

The graphical user interface may be advantageously capable of shifting from a formerly current level to a new level, immediately superior to said formerly current level, in said multi-level structure in response to user input on said input device, wherein the focused region may be adapted to replace said first plurality of user interface items belonging to said formerly current level with a fourth plurality of user interface items belonging to said new level for presentment and formerly presented in the unfocused region, and wherein the unfocused region may be adapted to remove said fourth plurality of user interface items from presentation therein.

This allows convenient navigation upwards in the multi-level structure and may be commanded by performing a navigate-up operation on aforesaid multi-way input device.

According to various, but not necessarily all, examples of the disclosure there is provided a mobile terminal having a controller, a display and an input device, the controller being coupled to said display and said input device and being adapted to provide a graphical user interface for giving a user access to a multi-level structure of selectable user interface items, the graphical user interface involving:
a focused region on said display;
an unfocused region on said display; and
a descriptor region on said display, wherein
the focused region is adapted for presentment of a first plurality of user interface items belonging to a current level in said multi-level structure, the focused region having a focus area for focusing on any desired one of said first plurality of user interface items in response to user input on said input device,
the unfocused region is adapted for presentment of a second plurality of user interface items belonging to at least one level superior to said current level in said multi-level structure, and
the descriptor region is adapted for presentment of descriptive information about a currently focused user interface item in said focus area.

The mobile terminal may be a mobile phone adapted for use in a mobile telecommunications network in compliance with a mobile telecommunications standard such as GSM, UMTS, D-AMPS or CDMA2000.

The mobile terminal may also or alternatively be a device selected from the group consisting of a digital notepad, a personal digital assistant and a hand-held computer.

According to various, but not necessarily all, examples of the disclosure there is provided a method of providing a graphical user interface for giving a user of an electronic apparatus access to a multi-level structure of selectable user interface items, the electronic apparatus having a display and an input device, the method comprising:
providing a focused region, an unfocused region and a descriptor region on said display;
presenting, in the focused region, a first plurality of user interface items belonging to a current level in said multi-level structure,
presenting, in the unfocused region, a second plurality of user interface items belonging to at least one level superior to said current level in said multi-level structure; and
detecting user input on said input device and, in response, focusing on a desired one of said first plurality of user interface items by presenting it as a currently focused user interface item in a focus area in the focused region and by presenting, in the descriptor region, descriptive information about the currently focused user interface item.

According to various, but not necessarily all, examples of the disclosure there is provided a computer program product directly loadable into a memory of a processor, the computer program product comprising program code for performing the method according to the third aspect.

Other objectives, features and advantages of the present invention will appear from the following detailed disclosure, from the attached dependent claims as well as from the drawings.

According to various, but not necessarily all, examples of the disclosure there is provided a graphical user interface for providing access for a user of an electronic apparatus (100; 200; 300) to a multi-level structure of selectable user interface items (512, 532), the electronic apparatus having a display (203; 303; 436) and an input device (210; 310; 438), the graphical user interface being wherein a focused region (520) on said display; an unfocused region (530) on said display; and a descriptor region (540) on said display, wherein the focused region is adapted for presentment of a first plurality of user interface items (512) belonging to a current level in said multi-level structure, the focused region having a focus area (524) for focusing on any desired one (522) of said first plurality of user interface items in response to user input on said input device, the unfocused region is adapted for presentment of a second plurality of user interface items (532) belonging to at least one level superior to said current level in said multi-level structure, and the descriptor region is adapted for presentment of descriptive information (542) about a currently focused user interface item (522) in said focus area.

In examples the user interface items (512, 532) are presented as image objects on said display.

In examples the user interface items of said second plurality of user interface items (532) are presented in a visually reduced form in said unfocused region (530) compared to said first plurality of user interface items (512) in said focused region (520).

In examples the currently focused user interface item (522) is presented in front view inside said focus area (524), whereas user interface items other than the focused one among said first plurality of user interface items (512) are presented in perspective views outside of said focus area and inside said focused region (520).

In examples the user interface items of said first plurality of user interface items (512) are presented inside said focused region (520) along a predefined path (510) which follows a non-linear geometrical curve.

In examples the unfocused region (530) is adapted for presentment of said second plurality of user interface items (532a, b) belonging to at least two successive levels superior to said current level in said multi-level structure.

In examples user interface items (532a) belonging to a first one of said at least two successive levels are presented along a first rectilinear path and wherein user interface items (532b) belonging to a second one of said at least two successive levels are presented along a second rectilinear path, parallel to said first rectilinear path.

In examples the descriptive information (542) presented in the descriptor region (540) includes first information (546) serving to explain a functionality of the focused user interface item (522) to be performed upon selection.

In examples the descriptive information (542) presented in the descriptor region (540) further includes second information (544) serving to indicate an hierarchical position of the focused user interface item (522) in the multi-level structure.

In examples the unfocused region (530) occupies an upper part of a display area (500) of the display, the focused region (520) occupies a center part of the display area, below said upper part, and the descriptor region (540) occupies a lower part of the display area, below said center part.

In examples the user interface items of said first plurality of user interface items (512) are scrollable in either a first (550_{L}) or a second (550_{R}) direction along a predefined path (510) inside said focused region (520) in response to user input on said input device (210; 310; 438) which indicates one of said first and second directions as a desired scrolling direction.

In examples said focus area (524) in said focused region (520) is fixed, i.e. has a static position on said display, a currently focused user interface item (3, Fig 5ab) being moved out from said focus area and a neighboring user interface item (4, Fig 5ab) being moved into said focus area as the user interface items of said first plurality of user interface items (512) are scrolled one step in said desired scrolling direction (550L) along said predefined path (510) .

In examples said predefined path (510) is symmetrical around at least one symmetry axis (514) and said static position of said focus area (524) on said display is located at an intersection of said path and said symmetry axis.

In examples the graphical user interface is capable of shifting from a formerly current level to a new level, immediately subordinate to said formerly current level, in said multi-level structure in response to user input on said input device (210; 310; 438), wherein the focused region (520) is adapted to replace said first plurality of user interface items (3.1-3.3, Fig 5cd) belonging to said formerly current level with a third plurality of user interface items (3.1.3-3.1.7, Fig 5cd) belonging to said new level for presentment, and the unfocused region (530) is adapted to include said first plurality of user interface items (3.1-3.3, 532b) in said second plurality of user interface items for presentment.

In examples the unfocused region (530) being adapted for presentment of user interface items (532a, 532b) belonging to at least two successive levels in said multi-level structure, wherein the unfocused region is furthermore adapted to remove user interface items from an uppermost one of said at least two successive levels in said multi-level structure when including said first plurality of user interface items in said second plurality of user interface items for presentment.

In examples the graphical user interface is capable of shifting from a formerly current level to a new level, immediately superior to said formerly current level, in said multi-level structure in response to user input on said input device, wherein the focused region (520) is adapted to replace said first plurality of user interface items belonging to said formerly current level with a fourth plurality of user interface items belonging to said new level for presentment and formerly presented in the unfocused region, and the unfocused region (530) is adapted to remove said fourth plurality of user interface items from presentation therein.

According to various, but not necessarily all, examples of the disclosure there is provided a mobile terminal (100; 200; 300) having a controller (400), a display (203; 303; 436) and an input device (210; 310; 438), the controller being coupled to said display and said input device and being adapted to provide a graphical user interface for giving a user access to a multi-level structure of selectable user interface items (512, 532), characterized in that the graphical user interface comprises: a focused region (520) on said display; an unfocused region (530) on said display; and a descriptor region (540) on said display, wherein the focused region is adapted for presentment of a first plurality of user interface items (512) belonging to a current level in said multi-level structure, the focused region having a focus area (524) for focusing on any desired one (522) of said first plurality of user interface items in response to user input on said input device, the unfocused region is adapted for presentment of a second plurality of user interface items (532) belonging to at least one level superior to said current level in said multi-level structure, and the descriptor region is adapted for presentment of descriptive information (542) about a currently focused user interface item (522) in said focus area.

In examples the user interface items (512, 532) are presented as image objects on said display.

In examples the currently focused user interface item (522) is presented in front view inside said focus area (524), whereas user interface items other than the focused one among said first plurality of user interface items (512) are presented in perspective views outside of said focus area and inside said focused region (520).

In examples the user interface items of said first plurality of user interface items (512) are presented inside said focused region (520) along a predefined path (510) which follows a non-linear geometrical curve.

In examples the user interface items (512, 532) are presented as image objects on said display and the user interface items of said second plurality of user interface items (532) are presented in a visually reduced form in said unfocused region (530) compared to said first plurality of user interface items (512) in said focused region (520).

In examples the unfocused region (530) is adapted for presentment of said second plurality of user interface items (532a,b) belonging to at least two successive levels superior to said current level in said multi-level structure.

In examples the user interface items (532a) belonging to a first one of said at least two successive levels are presented along a first rectilinear path and wherein user interface items (532b) belonging to a second one of said at least two successive levels are presented along a second rectilinear path, parallel to said first rectilinear path.

In examples the descriptive information (542) presented in the descriptor region (540) includes first information (546) serving to explain a functionality of the focused user interface item to be performed upon selection.

In examples the descriptive information (542) presented in the descriptor region (540) further includes second information (544) serving to indicate an hierarchical position of the focused user interface item (522) in the multi-level structure.

In examples the unfocused region (530) occupies an upper part of a display area (500) of the display, the focused region (520) occupies a center part of the display area, below said upper part, and the descriptor region (540) occupies a lower part of the display area, below said center part.

In examples the input device comprising a multi-way input device (210; 310) such as a 4/5-way navigation key or a joystick, wherein the controller (400) is adapted, upon receiving user input indicative of a first-way actuation of said input device, to cause scrolling of said first plurality of user interface items (512) in a first direction (550_{L}) along a predefined path (510), and the controller is adapted, upon receiving user input indicative of a second-way actuation of said input device, to cause scrolling of said first plurality of user interface items in a second direction (550_{R}) along said path, said second direction being opposite to said first direction.

In examples said focus area (524) in said focused region (520) is fixed, i.e. has a static position on said display, a currently focused user interface item (3, Fig 5ab) being moved out from said focus area and a neighboring user interface item (4, Fig 5ab) being moved into said focus area as the user interface items of said first plurality of user interface items (512) are scrolled one step along said predefined path (510) .

In examples said predefined path (510) is symmetrical around at least one symmetry axis (514) and said static position of said focus area (524) on said display is located at an intersection of said path and said symmetry axis.

In examples the controller (400) being capable of shifting from a formerly current level to a new level, immediately subordinate to said formerly current level, in said multi-level structure in response to user input on said input device (210; 310; 438), wherein the focused region (520) is adapted to replace said first plurality of user interface items (3.1-3.3, Fig 5cd) belonging to said formerly current level with a third plurality of user interface items (3.1.3-3.1.7, Fig 5cd) belonging to said new level for presentment, and the unfocused region (530) is adapted to include said first plurality of user interface items (3.1-3.3, 532b) in said second plurality of user interface items for presentment.

In examples the unfocused region (530) being adapted for presentment of user interface items (532a, 532b) belonging to at least two successive levels in said multi-level structure, wherein the unfocused region is furthermore adapted to remove user interface items from an uppermost one of said at least two successive levels in said multi-level structure when including said first plurality of user interface items in said second plurality of user interface items for presentment.

In examples the controller (400) being capable of shifting from a formerly current level to a new level, immediately superior to said formerly current level, in said multi-level structure in response to user input on said input device, wherein the focused region (520) is adapted to replace said first plurality of user interface items belonging to said formerly current level with a fourth plurality of user interface items belonging to said new level for presentment and formerly presented in the unfocused region, and the unfocused region (530) is adapted to remove said fourth plurality of user interface items from presentation therein.

In examples the mobile terminal is in the form of a mobile phone (100) adapted for use in a mobile telecommunications network (110).

In examples the mobile terminal is in the form of a device selected from the group consisting of a digital notepad, a personal digital assistant and a hand-held computer.

According to various, but not necessarily all, examples of the disclosure there is provided a method of providing a graphical user interface for giving a user of an electronic apparatus (100; 200; 300) access to a multi-level structure of selectable user interface items (512, 532), the electronic apparatus having a display (203; 303; 436) and an input device (210; 310; 438), the method comprising: providing a focused region (520), an unfocused region (530) and a descriptor region (540) on said display; presenting, in the focused region (520), a first plurality of user interface items (512) belonging to a current level in said multi-level structure, presenting, in the unfocused region (530), a second plurality of user interface items (532) belonging to at least one level superior to said current level in said multi-level structure; and detecting user input on said input device and, in response, focusing on a desired one of said first plurality of user interface items by presenting it as a currently focused user interface item (522) in a focus area (524) in the focused region and by presenting, in the descriptor region, descriptive information (542) about the currently focused user interface item.

According to various, but not necessarily all, examples of the disclosure there is provided a computer program product directly loadable into a memory of a processor, the computer program product comprising program code for performing the method according above.

The controller may be a CPU ("Central Processing Unit"), DSP ("Digital Signal Processor") or any other electronic programmable logic device or combination of devices. The display may be any commercially available type of display screen suitable for use in mobile terminals, including but not limited to a color TFT LCD display.

Generally, all terms used in the claims are to be interpreted according to their ordinary meaning in the technical field, unless explicitly defined otherwise herein. All references to "a/an/the [element, device, component, means, step, etc]" are to be interpreted openly as referring to at least one instance of said element, device, component, means, step, etc., unless explicitly stated otherwise. The steps of any method disclosed herein do not have to be performed in the exact order disclosed, unless explicitly stated.

### Brief Description of the Drawings

Embodiments of the present invention will now be described in more detail, reference being made to the enclosed drawings, in which:
Fig 1 is a schematic illustration of a telecommunication system, including a mobile terminal, a mobile telecommunications network and a couple of other devices, as an example of an environment in which the present invention may be applied.
Fig 2 is a schematic front view illustrating a mobile terminal according to a first embodiment, and in particular some external components that are part of a user interface towards a user of the mobile terminal.
Fig 3 is a schematic front view illustrating a mobile terminal according to a second embodiment.
Fig 4 is a schematic block diagram representing the internal component and software structure of a mobile terminal, which may be e.g. any of the embodiments shown in Figs 2 and 3.
Figs 5a-5g are schematic display screen illustrations of the graphical user interface according to one embodiment of the present invention.

### Detailed Description of the Invention

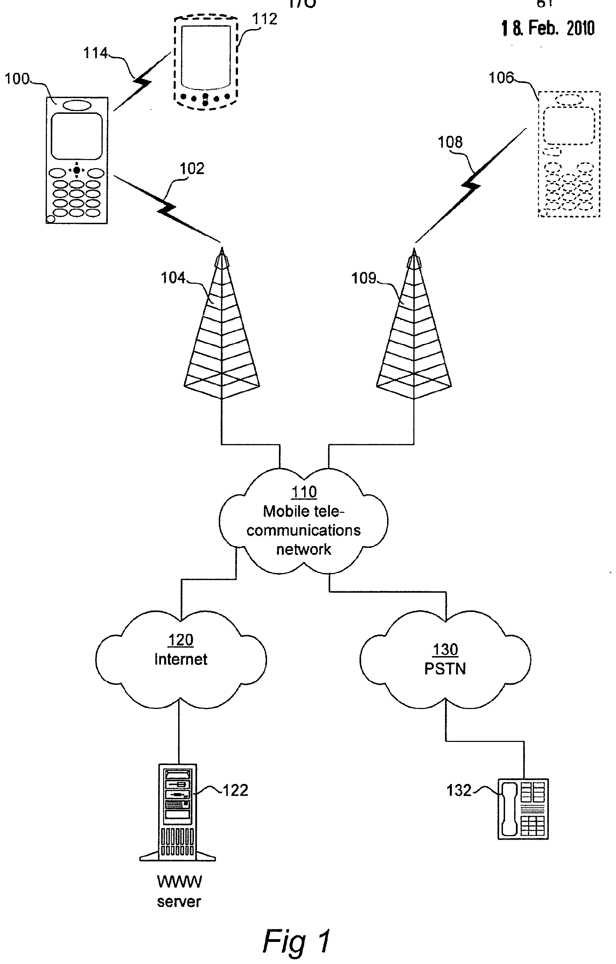

Fig 1 illustrates one example of a telecommunications system in which the invention may be applied. In the telecommunication system of Fig 1, various telecommunications services such as voice calls, data calls, facsimile transmissions, music transmissions, still image transmissions, video transmissions, electronic message transmissions and electronic commerce may be performed between a mobile terminal 100 according to the present invention and other devices, such as another mobile terminal 106, a PDA 112, a WWW server 122 and a stationary telephone 132. It is to be noticed that for different embodiments of the mobile terminal 100, different ones of the telecommunications services referred to above may or may not be available; the invention is not limited to any particular set of services in this respect. The mobile terminal 100 is provided with a graphical user interface, which may be used by a user of the mobile terminal 100 to control the terminal's functionality and get access to any of the telecommunications services referred to above, or to any other software application executing in the mobile terminal 100.

The mobile terminals 100, 106 are connected to a mobile telecommunications network 110 through RF links 102, 108 via base stations 104, 109. The mobile telecommunications network 110 may be in compliance with any commercially available mobile telecommunications standard, such as GSM, UMTS, D-AMPS or CDMA2000.

The mobile telecommunications network 110 is operatively connected to a wide area network 120, which may be Internet or a part thereof. Various client computers and server computers, including WWW server 122, may be connected to the wide area network 120.

A public switched telephone network (PSTN) 130 is connected to the mobile telecommunications network 110 in a familiar manner. Various telephone terminals, including stationary telephone 132, are connected to the PSTN 130.

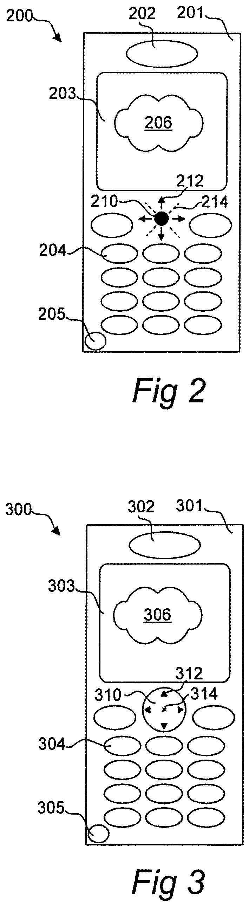

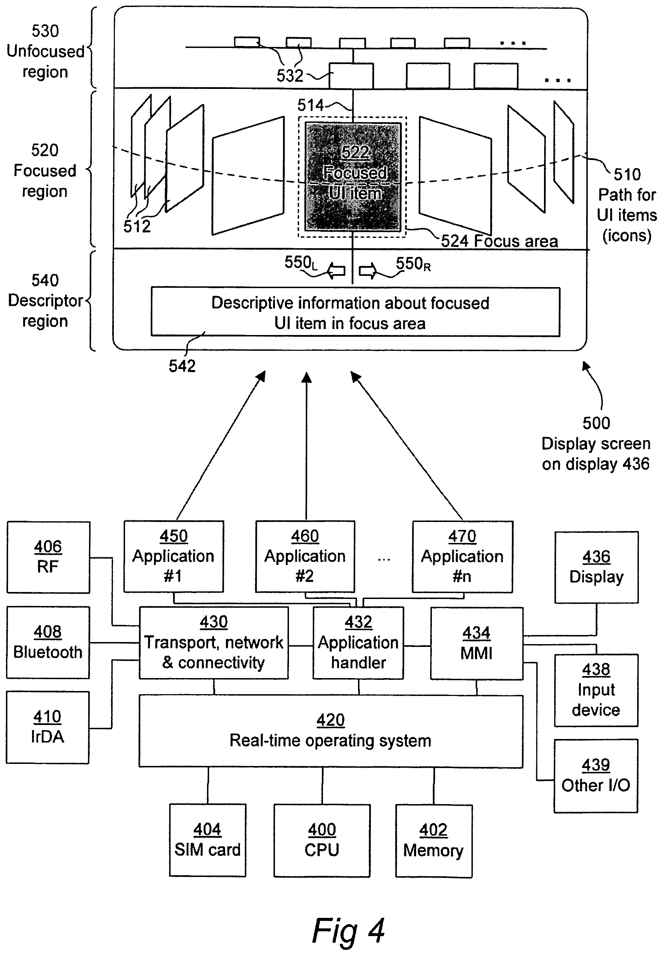

A first embodiment 200 of the mobile terminal 100 is illustrated in more detail in Fig 2. As is well known in the art, the mobile terminal 200 comprises an apparatus housing 201, a loudspeaker 202, a display 203, a set of keys 204 which may include a keypad of common ITU-T type (alpha-numerical keypad), and a microphone 205. In addition, but not shown in Fig 2, the mobile terminal 200 comprises various internal components, the more important of which are illustrated in Fig 4 and will be described later.

Furthermore, the mobile terminal has a multi-way input device 210 in the form of a joystick, the handle of which may be actuated by the user in a plurality of directions 212/214 so as to command navigating operations, i.e. to navigate in corresponding directions as desired, among user interface items in the graphical user interface 206. The graphical user interface 206 will be described in more detail later. The navigation directions may be 4 in number, as indicated by solid arrows 212 in Fig 2, and may be distributed orthogonally in an "up, down, left, right" or "north, south, west, east" fashion with respect to a base plane which is essentially coincidental or parallel with the display 203 or the front surface of apparatus housing 201. Alternatively, the navigation directions may be 8 in number, as indicated by dashed lines 214 together with solid arrows 212 in Fig 2a, and may be distributed around a virtual circle in aforesaid base plane with successive 45° displacements, representing corresponding actuations of the joystick handle by the user.

The user may also perform a selecting operation for any desired user interface item in the graphical user interface 206 by actuating the joystick 210 in a direction perpendicular to the base plane, e.g. by depressing the joystick at its top. Depending on implementation, this will either cause displacement of the entire joystick handle, or will cause depression of a joystick select button. In some embodiments such a joystick select button may be located at the top of the joystick handle; in others it may be mounted next to the joystick handle on the base plane.

Referring now to Fig 3, a second embodiment 300 of the mobile terminal 100 is illustrated. In this embodiment, the multi-way input device is implemented as a 5-way navigation key 310 which is can be actuated (depressed) at different circumferential positions 312, that represent different navigation directions, so as to generate navigating operations in similarity with the description above for the embodiment of Fig 2. Furthermore, a selecting operation may be commanded by depressing the 5-way key 310 at is center 314. The other components 301-306 are preferably identical with or equivalent to components 201-206 of Fig 2.

The internal component and software structure of a mobile terminal according to one embodiment, which for instance may be any of the aforementioned embodiments, will now be described with reference to Fig 4. The upper part of Fig 4 illustrates a typical display layout for the graphical user interface on the display screen 500 of the mobile terminal's display 436. The graphical user interface, its display screen layout and the particulars of its functionality will be described in more detail later.

The mobile terminal has a controller 400 which is responsible for the overall operation of the mobile terminal and is preferably implemented by any commercially available CPU ("Central Processing Unit"), DSP ("Digital Signal Processor") or any other electronic programmable logic device. The controller 400 has associated electronic memory 402 such as RAM memory, ROM memory, EEPROM memory, flash memory, hard disk, or any combination thereof. The memory 402 is used for various purposes by the controller 400, one of them being for storing data and program instructions for various software in the mobile terminal. The software includes a real-time operating system 420, a man-machine interface (MMI) module 434, an application handler 432 as well as various software applications 450-470. The software applications may relate to any of the different kinds of telecommunication services described above in conjuntion with Fig 1, and/or may relate to non-telecommunication applications that are purely local to the terminal and do not interact with the telecommunications network. Thus, applications 450-470 may for instance include a telephone application, a contacts (phonebook) application, a messaging application, a calendar application, a control panel application, a camera application, a mediaplayer, one or more video games, a notepad application, etc.

The MMI module 434 cooperates with the display 436 (which may be identical to the display 203 of Fig 2 or the display 303 of Fig 3), a joystick 438 (which may be identical to the joystick 210 of Fig 2) as well as various other I/O devices such as a microphone, a speaker, a vibrator, a keypad (e.g. the set of keys 204 of Fig 2), a ringtone generator, an LED indicator, volume controls, etc, and is therefore provided with appropriate device drivers for these devices. Supported by the real-time operating system 420, the MMI module 434 also cooperates with any active application(s) 450-470, through the application handler 432, and provides aforesaid graphical user interface, by means of which the user may control the functionality of the mobile terminal, such as selecting actions or functions to be performed in the active application(s), or controlling different settings or parameters in the mobile terminal.

The software also includes various modules, protocol stacks, drivers, etc., which are commonly designated as 430 and which provide communication services (such as transport, network and connectivity) for an RF interface 406, and optionally a Bluetooth interface 408 and/or an IrDA interface 410. The RF interface 406 comprises an internal or external antenna as well as appropriate radio circuitry for establishing and maintaining a wireless link to a base station (e.g. the link 102 and base station 104 in Fig 1). As is well known to a man skilled in the art, the radio circuitry comprises a series of analog and digital electronic components, together forming a radio receiver and transmitter. These components include, i.a., band pass filters, amplifiers, mixers, local oscillators, low pass filters, AD/DA converters, etc. The mobile terminal may be provided with other wireless interfaces than the ones mentioned above, including but not limited to WLAN and HomeRF. Any one of such other wireless interfaces, or aforementioned optional interfaces 408 and 410, may be used for establishing and communicating over the wireless link 114 to the nearby device 112 of Fig 1.

The mobile terminal also has a SIM card 404 and an associated reader. As is commonly known, the SIM card 404 comprises a processor as well as local work and data memory.

Referring again to the upper part of Fig 4, the graphical user interface will be described in more detail. As previously explained, a user of the mobile terminal will use the graphical user interface to navigate and select among a plurality of available user interface items arranged in a multi-level hierarchical structure. In more particular, the display screen 500 of display 436 is divided into an unfocused region 530, a focused region 520 and a descriptor region 540.

The purpose of the focused region 520 is to present user interface items 512 belonging to a current level in the multi-level structure, and also to make a currently focused user interface item 522 among the user interface items 512 available for convenient selection by the user. The purpose of the unfocused region 530 is correspondingly to present user interface items 532 belonging to superior level(s) in the multi-level structure. Finally, the purpose of the descriptor region 540 is to present descriptive information 542 about the currently focused user interface item 522. As will be described in more detail below, the user may navigate among the user interface items on the current level in the focused region 520 to change focus (i.e. horizontal scroll, as indicated by horizontal arrows 550_{L} and 550_{R}), and also between different levels in the multi-level structure (i.e. vertically).

In the disclosed embodiment, the user interface items are shown as small image objects in the form of icons. As to the file format, image size, color depth, etc, of these icons, they may generally be selected from any existing image standard, compressed or non-compressed, including but not limited to JPEG, GIF, TIFF or plain bit map. In the present embodiment, the icons are provided as low-resolution, color bit map images that are physically stored in memory 402.

As seen in Fig 4, the user interface items 512 belonging to the current level are presented along a curved path 510. For the sake of clarity, the path 510 is illustrated as visible in dashed style in Fig 4, but in an actual implementation the path itself is preferably invisible. Various geometrical shapes are possible for the path 510. Advantageously, any such shape is symmetrical around a symmetry axis 514 which may be coincident with a vertical center axis of the display screen 500. Since the user interface items 512 are arranged along a curved path rather than a (recti-)linear, more items may be shown simultaneously on the display screen 500 than if the path would have been straight.

Use of the available display area on the display screen 500 is optimized further in the disclosed embodiment by showing all user interface items 512 in perspective views rather than ordinary front views, except for the currently focused item 522 which is shown in front view in the focus area 524. The focus area 524 is fixed, i.e. has a static position on the display screen 500, at an intersection of the path 510 and its symmetry axis 514.

In some implementations, the perspective effect of the icons are pre-processed, i.e. the icons are produced on beforehand and stored in memory 402 as image objects with their contents shown in perspective. Thus, in such implementations, the graphical user interface only has to read the pre-processed icons from memory 402 and arrange them along the curved path 510 for presentation of the user interface items 512 in perspective.

The disclosed embodiment does not use such preprocessing, a reason being that the perspective is different between individual icons. As seen in Fig 4, the perspective effect is strongest for icons remote from the centered focused user interface item 522, and grows weaker the closer the particular icon gets to the focused one. Therefore, producing the perspective effect on beforehand makes little sense in this case, since the perspective effects will anyway have to be recalculated each time the sequence of user interface items 512 is scrolled in either direction.

Such varying perspective between different icons is an advantageous feature. This allows even more icons to be shown in the focused region 520 of the display screen 500 at the same time, without jeopardizing the legibility to any considerable extent, since the more centered icons are shown at a low perspective angle, or even none (as is the case with the focused user interface items 522, which is shown in front view instead of perspective).

Thus, in the disclosed embodiment, for each user interface item 512/522 that is to be shown in the focused region 520, its icon is read from memory 402 by the graphical user interface. The read icon is processed by appropriate image processing algorithms included in or available to the software that defines the graphical user interface, so as to produce the desired perspective effect. When the perspective effect has been created, the icon is presented along the curved path 510. Whether or not the perspective effect of the icons is to be pre-produced or produced "on the fly" is a trade-off which will have to be considered for each implementation.

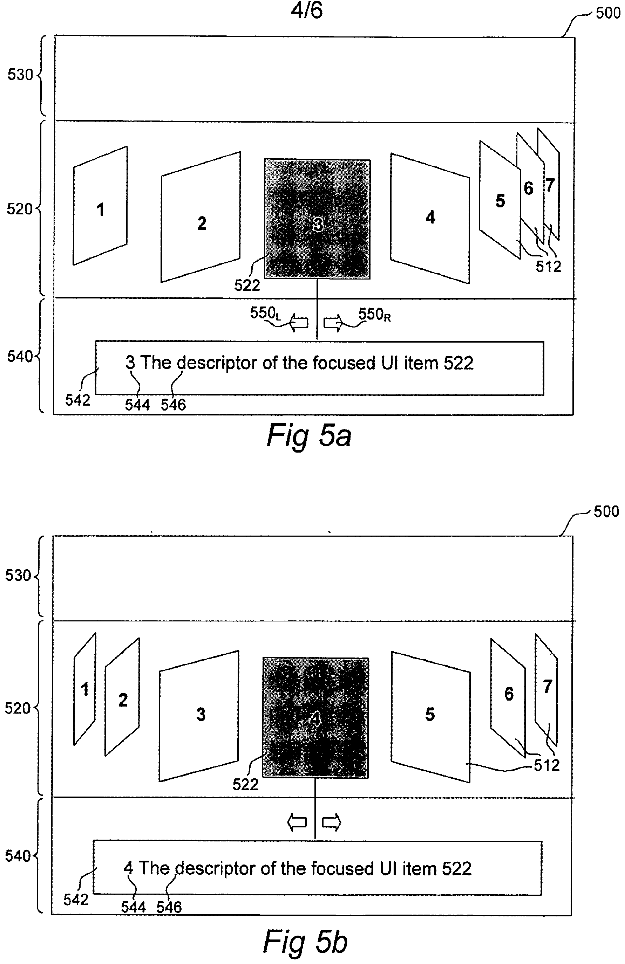

In the disclosed embodiment, a description 542 of the focused image 522 is provided for the benefit of the user in the descriptor region 540 on the display screen 500. As seen in Fig 4, the descriptor region 540 is advantageously located in the lowermost part of the display screen 500, in vertical alignment with the focus area 524 around the symmetry axis 514. The description 542 serves to provide a different kind of information about the focused user interface item 522 than the strictly visual and limited information provided by a small-sized, low-resolution icon. The description 542 advantageously includes information on the focused item's location in the multi-level structure, such as a hierarchical index number and/or a file system path. Examples of hierarchical index numbers are shown at 544 in Figs 5a-5d. Furthermore, the description 542 advantageously includes information that explains, to the intended user, the purpose or meaning of the focused user interface item, e.g. the functionality that will be performed if the focused user interface item is selected by a selecting operation on the input device 438. Such explanatory information may be a short piece of text, as illustrated at 546 in Figs 5a-5d.

When another user interface item 512 is scrolled into the focus area 524, the description 542 in the descriptor region 540 is updated accordingly to reflect the new focused item 522. Thus, the focus area 524 functions like a statically positioned cursor that indicates which one of the user interface items 512 that is currently focused, and thus available for immediate selection by the user, and is described further in the descriptor region 540.

Figs 5a and 5b illustrate how the contents of the display screen 500 change when the user commands scrolling of the user interface items 512 in the focus region 520 by one (1) step to the left. As previously mentioned, the arrows 550_{L} and 550_{R} indicate the possible scrolling directions, i.e. to the left and to the right, for the user. In Fig 5a, the currently focused item 522 is labeled 3 and is thus number 3 in sequence among the totally 7 available user interface items 512 on the current level of the multi-level structure, and its nearest neighbors along the path 510 are thus number 2 (to the left of the focused item 522), and number 4 (to the right of the focused item 522). In Figs 5a and 5b the current level is the top (root) level in the multi-level structure. Since there are no superior levels above this top level, there is (of course) nothing to display in the unfocused region 530. As explained above, the description of the currently focused item 3 is shown at 542.

Now, by giving a certain user input on the input device 438, the user may command scrolling. For instance, such user input may be given by actuating the joystick 210 (Fig 2) or 5-way key 310 (Fig 3) in its left or right navigation direction.

Assuming that the user gives a user input to command scrolling to the left, the graphical user interface will receive this user input and promptly act to update the display screen 500 so that it will have the contents shown in Fig 5b. As is seen in Fig 5b, all user interface items 512 are moved one position to the left (clockwise rotation) along the path 510. The formerly focused item 3 is shifted out of focus into the position that was formerly held by item 2. At the left side of the focus area 524, item 2 moves one step to the position formerly held by item 1, etc., i.e. all items at this side are shifted one step away from the focus area 524. At the right side, on the other hand, all items are shifted one step closer to the focus area 524, and item 3's nearest right-hand neighbor 4 is shifted into the focus area 524 and becomes the focused user interface item 522.

Moreover, the description of item 3 is replaced by the description of item 4 at 542. If the current level in the multi-level structure contains more user interface items than the focused region 520 is capable of presenting at one and the same time, the farthest item on the left side of the focus area 524 may disappear as the items are scrolled from the state in Fig 5a to the state in Fig 5b, whereas a new and formerly not presented item may appear at the farthest position along the path 510 on the right side of the focus area 524 in Fig 5b.

Of course, if the user instead gives a user input in Fig 5a to perform a one-step scrolling to the right, all updates on the display screen will reflect this, so that the user interface items 512 are shifted one step to the right (anti-clockwise rotation) along the path 510.

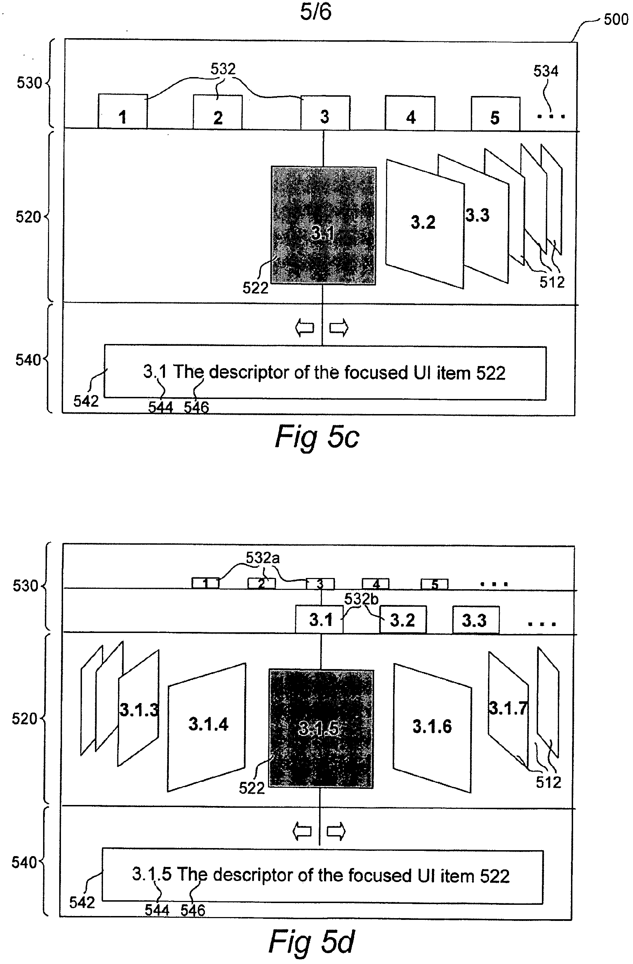

Figs 5c and 5d illustrate another advantageous feature of the disclosed embodiment, allowing convenient navigation between levels in the multi-level structure so as to set the current level. Fig 5c illustrates the situation after the user has selected the top level's focused user interface item 3 of Fig 5a by performing a selecting operation on the input device 438. The top-level user interface items 1, 2, 3, 4 and 5 that were formerly presented in the focused region 520 are moved to the unfocused region 530 at the uppermost part of the display screen 500, as seen at 532. The top-level user interface items 6 and 7, that were shown in the focused region 520 in Fig 5a but are the most remote from the then focused item 3, are not shown in the unfocused region 530 in Fig 5c. Instead, a continuation sign 534 is given to indicate that the superior level contains more user interface items than the ones shown on the display screen 500.

The user interface items 532 in the unfocused region 530 are not arranged in the compact manner used for the focused region 520 (curved path alignment, perspective views). Therefore, there may be room for less items 532 for simultaneous presentation in the unfocused region 530 than in the focused region 520. Nevertheless, some compactness has been achieved in the disclosed embodiment by presenting the user interface items 532 in the unfocused region 530 in a visually reduced form compared to the user interface items 512 in the focused region 520. In more particular, the user interface items 532 are shown at a smaller image size and also with only one horizontal half of the icon visible - the icons appear to be folded along a horizontal mid line with only the upper icon half visible to the user. This arrangement is particularly advantageous since it saves vertical space on the display screen 500 and, consequently, offers more available vertical space for use by the focused region 520. Giving more vertical space to the focused region in turn allows use of a steeper icon alignment path 510 and, ultimately, presentation of more items 512 simultaneously in the focused region 520.

In Fig 5c, the focused region 520 presents user interface items 512 from a second level, subordinate to the top level, in the multi-level structure. These user interface items 512, which are labeled 3.1, 3.2, 3.3, ... in Fig 5c, are children of the top-level user interface item 3, and the first one of them, 3.1, is shown in the focus area 524. The descriptor region 540 is updated to present the descriptor 542 of the currently focused user interface item 3.1. The user may scroll horizontally among the user items 3.1, 3.2, 3.3, ... in the same way as has been described above for Fig 5b, thereby moving the sequence of user interface items in the focused region 520 relative to the static focus area 524 and allowing different items to become focused and selectable by a subsequent selecting operation (or navigate-down operation) on the input device 438.

If such a selected user interface item is a leaf, i.e. has no children in the multi-level structure, the selection will cause some associated functionality to be performed. If the selected user interface item on the other hand is a node, the selection will cause yet a movement downwards in the multi-level structure and result in the situation shown in Fig 5d. Here, the focused region 520 will again be updated, this time to present user interface items 512 from a third level, subordinate to the second level whose user interface items 3.1, 3.2, 3.3, ... were presented in the focused region in Fig 5c. The user interface items on this third level are labeled ..., 3.1.3, 3.1.4, 3.1.5, 3.1.6, ... in Fig 5d. Item 3.1.5 is focused in the focus area 524, and its descriptor 542 is presented in the descriptor region 540. The second-level items 3.1, 3.2, 3.2, ... are removed from the focused region and are instead shown in their visually reduced form (as described above) at 532b in the unfocused region 530. The top-level items 1, 2, 3, ... are moved one position up within the unfocused region 530 and may advantageously be shown at an even more visually reduced form, as seen at 532a in Fig 5c.

Alternatively, from either of Fig 5c or Fig 5d, the user may choose to return to the preceding level in the multi-level structure by performing a navigate-up operation on the input device 438. If starting from Fig 5d, this will result in the situation shown in Fig 5c. If starting from Fig 5c, it will result in the situation shown in Fig 5a.

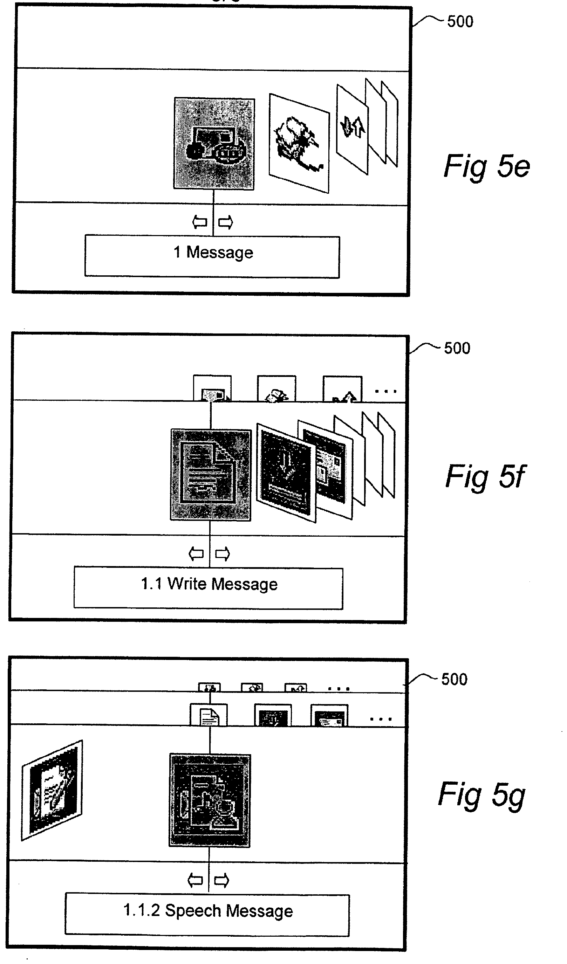

Figs 5e-5g serve to give a less schematic illustration of how the display screen 500 may look like in an actual implementation, namely when the user operates the graphical user interface to command generation of a new speech message.

First, as seen in Fig 5e, the graphical user interface is at its top level and the currently focused user interface item is one that represents messaging (for instance performed by a messaging application included among software applications 450-470 in Fig 4). The user selects the focused user interface item, "1 Message", and the display screen 500 changes to the state shown in Fig 5f. The user interface items from the top level are moved from the focused region 520 to the unfocused region 530, and those items that are located at the next subordinate, or inferior, level and are associated with item "1 Message" as children thereof are now instead shown in the focused region 520. The descriptor region 540 is updated accordingly to show the descriptor for the first user interface item at this next level, i.e. "1.1 Write Message". Thus, in this example the user may directly perform another selecting operation which will cause presentation of the third-level user interface items that are associated with item "1.1 Write Message", as children thereof, in the focused region 520. Since the user desires to create a new speech message and this user item, "1.1.2 Speech Message", is number 2 among the user interface items at this new level, the user will have to perform a one-step scroll to the right in order to put the desired item in the focus area 524. Now, the situation is as shown in Fig 5g. By finally performing yet a selecting operation, the user will arrive at the desired user interface item and command generation of a new speech message. Thus, three simple selecting operations and one simple scrolling operation are all what is needed to command this, starting from the top level of the graphical user interface.

The methodology described above for the disclosed embodiment of Figs 4 and 5a-5g may advantageously be implemented as a computer program product which may be installed by a manufacturer or distributor, or even an end-user in at least some cases, in a mobile terminal's memory (e.g. memory 402 of Fig 4). Such computer program will include program code that when executed by a processor in the mobile terminal (e.g. controller 400 of Fig 4) will perform the graphical user interface functionality described above.

The invention has mainly been described above with reference to a few embodiments. However, as is readily appreciated by a person skilled in the art, other embodiments than the ones disclosed above are equally possible within the scope of the invention, as defined by the appended patent claims.

## Claims

1. An electronic apparatus (100; 200; 300) comprising:
display means (203; 303; 436) for displaying a graphical user interface for providing access to selectable user interface items (512);
input means (210; 310; 438) for navigating among items (512) of the graphical user interface; and
control means for:
presenting a plurality of user interface items (512) along a predefined path (510) on the display means (203) in the graphical user interface, the graphical user interface having a focus area (524);
scrolling the user interface items of said plurality of user interface items (512) in either a first (550L) or a second (550R) direction along said pre-defined path (510) in response to user input on said input means (210; 310; 438), which indicates one of said first and second directions as a desired scrolling direction;
presenting the user interface item (522) currently in the focus area (524) in front view having a perspective angle of zero, wherein the perspective angle is an angle of rotation between a front view and a side view;
presenting user interface items (512) other than the user interface item in the focus area (524) in perspective views outside of said focus area (524) and inside said graphical user interface, wherein the perspective angle of the user interface items increases as the distance from the focus area (524) increases and wherein the size of a displayed user interface item decreases as the perspective angle increases; and
moving a currently focused user interface item (522) out from said focus area (524) and moving a neighboring user interface item (512) into said focus area (524) as the user interface items (512) of said first plurality of user interface items (512) are scrolled one step in said desired scrolling direction (550L) along said pre-defined path (510).

2. The electronic apparatus of claim 1, wherein said control means is further for presenting said user interface items as image objects on said display (203).

3. The electronic apparatus of claim 1, wherein the predefined path (510) is symmetrical in relation to the focus area (524).

4. The electronic apparatus of claim 1, wherein the predefined path (510) is curved.

5. The electronic apparatus of claim 1, wherein the control means are further for receiving a scroll input indicating a direction and in response thereto scrolling all user interface items (512) in the indicated direction and removing the farthest user interface item in the indicated direction and introducing a user interface item at the end of the user interface items in a direction opposite the indicated direction.

6. The electronic apparatus of claim 1, wherein the graphical user interface further comprises a descriptor region (540) on said display means (203), and the control means further being for presenting descriptive information about a user interface item currently in said focused area (524) in the descriptor region (540).

7. The electronic apparatus of claim 6, wherein the control means are for presenting said descriptor region on a lower part of said display means (203), below a center part of the display means (203) .

8. The electronic apparatus of claim 6, wherein the descriptive information presented in the descriptor region (540) includes first information serving to explain a functionality of the focused user interface item (512) to be performed upon selection.

9. The electronic apparatus of claim 1, wherein the control means is further for presenting information serving to indicate a hierarchical position of the focused user interface item in a multi-level structure.

10. A method of providing a graphical user interface for giving a user of an electronic apparatus (100) access to selectable user interface items (512), the electronic apparatus (100) having a display (203) and input means (210), the method comprising:
presenting a plurality of user interface items (512) along a predefined path (510) on the display (203) in the graphical user interface, the graphical user interface having a focus area (524);
scrolling the user interface items of said plurality of user interface items (512) in either a first (550L) or a second (550R) direction along said pre-defined path (510) in response to user input on said input means (210; 310; 438), which indicates one of said first and second directions as a desired scrolling direction;
presenting the user interface item (512) currently in the focus area (524) in front view having a perspective angle of zero, wherein the perspective angle is an angle of rotation between a front view and a side view;
presenting user interface items (512) other than the user interface item in the focus area (524) in perspective views outside of said focus area (524) and inside said graphical user interface, wherein the perspective angle of the user interface items increases as the distance from the focus area (524) increases and wherein the size of a displayed user interface item decreases as the perspective angle increases; and
moving a currently focused user interface item (522) out from said focus area (524) and moving a neighboring user interface item (512) into said focus area (524) as the user interface items (512) of said first plurality of user interface items (512) are scrolled one step in said desired scrolling direction (550L) along said pre-defined path (510).

11. The method of claim 10, comprising presenting said user interface items as image objects on said display (203).

12. The method of claim 10, wherein the predefined path (510) is symmetrical in relation to the focus area (524).

13. The method of claim 10, wherein the predefined path (510) is curved.

14. A computer program product for giving a user of an electronic apparatus access to selectable user interface items, the computer program product comprising program code for:
presenting a plurality of user interface items (512) along a predefined path (510) on a display (203) in a graphical user interface, the graphical user interface having a focus area (524) ;
scrolling the user interface items of said plurality of user interface items (512) in either a first (550L) or a second (550R) direction along said pre-defined path (510) in response to user input on input means (210; 310; 438), which indicates one of said first and second directions as a desired scrolling direction;
presenting the user interface item (512) currently in the focus area (524) in front view having a perspective angle of zero, wherein the perspective angle is an angle of rotation between a front view and a side view;
presenting user interface items (512) other than the user interface item in the focus area (524) in perspective views outside of said focus area (524) and inside said graphical user interface, wherein the perspective angle of the user interface items increases as the distance from the focus area (524) increases and wherein the size of a displayed user interface item decreases as the perspective angle increases; and for
moving a currently focused user interface item (522) out from said focus area (524) and moving a neighboring user interface item (512) into said focus area (524) as the user interface items (512) of said first plurality of user interface items (512) are scrolled one step in said desired scrolling direction (550L) along said pre-defined path (510).

15. The computer program product of claim 14, comprising program code for presenting said user interface items as image objects on said display (203).

## Patentansprüche

1. Elektronische Vorrichtung (100; 200; 300), umfassend:
Anzeigemittel (203; 303; 436) zum Anzeigen einer grafischen Benutzerschnittstelle zur Bereitstellung von Zugriff auf auswählbare Benutzerschnittstellenelemente (512);
Eingabemittel (210; 310; 438) zum Navigieren durch die Elemente (512) der grafischen Benutzerschnittstelle; und
Steuermittel zum:
Darstellen einer Mehrzahl von Benutzerschnittstellenelementen (512) entlang eines vordefinierten Pfades (510) auf den Anzeigemitteln (203) in der grafischen Benutzerschnittstelle, wobei die grafische Benutzerschnittstelle einen Fokusbereich (524) aufweist;
Scrollen der Benutzerschnittstellenelemente der Mehrzahl von Benutzerschnittstellenelementen (512) entweder in einer ersten (550L) oder einer zweiten (550R) Richtung entlang des vordefinierten Pfades (510) in Reaktion auf eine Benutzereingabe auf dem Eingabemittel (210; 310; 438), die eine der ersten und der zweiten Richtung als eine gewünschte Scrollrichtung angibt;
Darstellen des gegenwärtig im Fokusbereich (524) befindlichen Benutzerschnittstellenelements (522) in Vorderansicht mit einem Perspektivenwinkel von null, wobei der Perspektivenwinkel ein Drehwinkel zwischen einer Vorderansicht und einer Seitenansicht ist;
Darstellen von anderen Benutzerschnittstellenelementen (512) als dem Benutzerschnittstellenelement im Fokusbereich (524) in perspektivischen Ansichten außerhalb des Fokusbereichs (524) und innerhalb der grafischen Benutzerschnittstelle, wobei der Perspektivenwinkel der Benutzerschnittstellenelemente mit zunehmender Entfernung vom Fokusbereich (524) zunimmt, und wobei die Größe eines angezeigten Benutzerschnittstellenelements mit zunehmendem Perspektivenwinkel abnimmt; und
Bewegen eines gegenwärtig fokussierten Benutzerschnittstellenelements (522) aus dem Fokusbereich (524) und Bewegen eines benachbarten Benutzerschnittstellenelements (512) in den Fokusbereich (524), wenn die Benutzerschnittstellenelemente (512) der ersten Mehrzahl von Benutzerschnittstellenelemente (512) einen Schritt in der gewünschten Scrollrichtung (550L) entlang des vordefinierten Pfades (510) gescrollt werden.

2. Elektronische Vorrichtung nach Anspruch 1, wobei das Steuermittel ferner zum Darstellen der Benutzerschnittstellenelemente als Bildobjekte auf der Anzeige (203) ist.

3. Elektronische Vorrichtung nach Anspruch 1, wobei der vordefinierte Pfad (510) in Bezug auf den Fokusbereich (524) symmetrisch ist.

4. Elektronische Vorrichtung nach Anspruch 1, wobei der vordefinierte Pfad (510) gekrümmt ist.

5. Elektronische Vorrichtung nach Anspruch 1, wobei die Steuermittel ferner zum Empfangen einer Scrolleingabe, die eine Richtung angibt, und in Reaktion darauf Scrollen aller Benutzerschnittstellenelemente (512) in der angegebenen Richtung und Entfernen des am weitesten entfernten Benutzerschnittstellenelements in der angegebenen Richtung und Einfügen eines Benutzerschnittstellenelements am Ende der Benutzerschnittstellenelemente in einer Richtung entgegengesetzt zur angegebenen Richtung sind.

6. Elektronische Vorrichtung nach Anspruch 1, wobei die grafische Benutzerschnittstelle eine Beschreibungsregion (540) auf dem Anzeigemittel (203) umfasst, und
die Steuermittel ferner zum Darstellen von beschreibenden Informationen über ein gegenwärtig im Fokusbereich (524) befindliches Benutzerschnittstellenelement in der Beschreibungsregion (540) sind.

7. Elektronische Vorrichtung nach Anspruch 6, wobei die Steuermittel zum Darstellen der Beschreibungsregion auf einem unteren Teil der Anzeigemittel (203) unter einem mittleren Teil des Anzeigemittels (203) sind.

8. Elektronische Vorrichtung nach Anspruch 6, wobei die beschreibenden Informationen, die in der Beschreibungsregion (540) dargestellt werden, erste Informationen umfassen, die zum Erklären einer Funktionalität des fokussierten Benutzerschnittstellenelements (512) dienen, die bei Auswahl ausgeführt werden soll.

9. Elektronische Vorrichtung nach Anspruch 1, wobei das Steuermittel ferner zum Darstellen von Informationen ist, die zum Angeben einer hierarchischen Position des fokussierten Benutzerschnittstellenelements in einer Struktur mit mehreren Ebenen dienen.

10. Verfahren zur Bereitstellung einer grafischen Benutzerschnittstelle, um einem Benutzer einer elektronischen Vorrichtung (100) Zugriff auf auswählbare Benutzerschnittstellenelemente (512) zu verleihen, wobei die elektronische Vorrichtung (100) eine Anzeige (203) und Eingabemittel (210) aufweist, wobei das Verfahren umfasst:
Darstellen einer Mehrzahl von Benutzerschnittstellenelementen (512) entlang eines vordefinierten Pfades (510) auf der Anzeige (203) in der grafischen Benutzerschnittstelle, wobei die grafische Benutzerschnittstelle einen Fokusbereich (524) aufweist;
Scrollen der Benutzerschnittstellenelemente der Mehrzahl von Benutzerschnittstellenelementen (512) entweder in einer ersten (550L) oder einer zweiten (550R) Richtung entlang des vordefinierten Pfades (510) in Reaktion auf eine Benutzereingabe auf dem Eingabemittel (210; 310; 438), die eine der ersten und der zweiten Richtung als eine gewünschte Scrollrichtung angibt;
Darstellen des gegenwärtig im Fokusbereich (524) befindlichen Benutzerschnittstellenelements (512) in Vorderansicht mit einem Perspektivenwinkel von null, wobei der Perspektivenwinkel ein Drehwinkel zwischen einer Vorderansicht und einer Seitenansicht ist;
Darstellen von anderen Benutzerschnittstellenelementen (512) als dem Benutzerschnittstellenelement im Fokusbereich (524) in perspektivischen Ansichten außerhalb des Fokusbereichs (524) und innerhalb der grafischen Benutzerschnittstelle, wobei der Perspektivenwinkel der Benutzerschnittstellenelemente mit zunehmender Entfernung vom Fokusbereich (524) zunimmt, und wobei die Größe eines angezeigten Benutzerschnittstellenelements mit zunehmendem Perspektivenwinkel abnimmt; und
Bewegen eines gegenwärtig fokussierten Benutzerschnittstellenelements (522) aus dem Fokusbereich (524) und Bewegen eines benachbarten Benutzerschnittstellenelements (512) in den Fokusbereich (524), wenn die Benutzerschnittstellenelemente (512) der ersten Mehrzahl von Benutzerschnittstellenelemente (512) einen Schritt in der gewünschten Scrollrichtung (550L) entlang des vordefinierten Pfades (510) gescrollt werden.

11. Verfahren nach Anspruch 10, umfassend ein Darstellen der Benutzerschnittstellenelemente als Bildobjekte auf der Anzeige (203).

12. Verfahren nach Anspruch 10, wobei der vordefinierte Pfad (510) in Bezug auf den Fokusbereich (524) symmetrisch ist.

13. Verfahren nach Anspruch 10, wobei der vordefinierte Pfad (510) gekrümmt ist.

14. Computerprogrammprodukt, um einem Benutzer einer elektronischen Vorrichtung Zugriff auf auswählbare Benutzerschnittstellenelemente zu verleihen, wobei das Computerprogrammprodukt Programmcode umfasst zum:
Darstellen einer Mehrzahl von Benutzerschnittstellenelementen (512) entlang eines vordefinierten Pfades (510) auf einer Anzeige (203) in einer grafischen Benutzerschnittstelle, wobei die grafische Benutzerschnittstelle einen Fokusbereich (524) aufweist;
Scrollen der Benutzerschnittstellenelemente der Mehrzahl von Benutzerschnittstellenelementen (512) entweder in einer ersten (550L) oder einer zweiten (550R) Richtung entlang des vordefinierten Pfades (510) in Reaktion auf eine Benutzereingabe auf Eingabemitteln (210; 310; 438), die eine der ersten und der zweiten Richtung als eine gewünschte Scrollrichtung angibt;
Darstellen des gegenwärtig im Fokusbereich (524) befindlichen Benutzerschnittstellenelements (512) in Vorderansicht mit einem Perspektivenwinkel von null, wobei der Perspektivenwinkel ein Drehwinkel zwischen einer Vorderansicht und einer Seitenansicht ist;
Darstellen von anderen Benutzerschnittstellenelementen (512) als dem Benutzerschnittstellenelement im Fokusbereich (524) in perspektivischen Ansichten außerhalb des Fokusbereichs (524) und innerhalb der grafischen Benutzerschnittstelle, wobei der Perspektivenwinkel der Benutzerschnittstellenelemente mit zunehmender Entfernung vom Fokusbereich (524) zunimmt, und wobei die Größe eines angezeigten Benutzerschnittstellenelements mit zunehmendem Perspektivenwinkel abnimmt; und
Bewegen eines gegenwärtig fokussierten Benutzerschnittstellenelements (522) aus dem Fokusbereich (524) und Bewegen eines benachbarten Benutzerschnittstellenelements (512) in den Fokusbereich (524), wenn die Benutzerschnittstellenelemente (512) der ersten Mehrzahl von Benutzerschnittstellenelemente (512) einen Schritt in der gewünschten Scrollrichtung (550L) entlang des vordefinierten Pfades (510) gescrollt werden.

15. Computerprogrammprodukt nach Anspruch 14, umfassend Computerprogrammcode zum Darstellen der Benutzerschnittstellenelemente als Bildobjekte auf der Anzeige (203).

## Revendications

1. Appareil électronique (100 ; 200 ; 300) comprenant :
des moyens d'affichage (203 ; 303 ; 436) pour afficher une interface utilisateur graphique pour donner accès à des éléments d'interface sélectionnables par l'utilisateur (512) ;
des moyens d'entrée (210 ; 310 ; 438) pour naviguer parmi les éléments (512) de l'interface utilisateur graphique ; et
des moyens de commande pour :
présenter une pluralité d'éléments d'interface utilisateur (512) le long d'un trajet prédéfini (510) sur les moyens d'affichage (203) dans l'interface utilisateur graphique, l'interface utilisateur graphique ayant une zone ayant le focus (524) ;
faire défiler les éléments d'interface utilisateur de ladite pluralité d'éléments d'interface utilisateur (512) dans une première direction (550L) ou une seconde direction (550R) le long dudit trajet prédéfini (510) en réponse à une entrée utilisateur sur lesdits moyens d'entrée (210 ; 310 ; 438), laquelle indique une desdites première et seconde directions comme direction de défilement souhaitée ;
présenter l'élément d'interface utilisateur (522) actuellement dans la zone ayant le focus (524) en vue de face avec un angle de perspective nul, où l'angle de perspective est un angle de rotation entre une vue de face et une vue de côté ;
présenter des éléments d'interface utilisateur (512) autres que l'élément d'interface utilisateur dans la zone ayant le focus (524) dans des vues en perspective à l'extérieur de ladite zone ayant le focus (524) et à l'intérieur de ladite interface utilisateur graphique, où l'angle de perspective des éléments d'interface utilisateur augmente à mesure que la distance à la zone ayant le focus (524) augmente et où la taille d'un élément d'interface utilisateur affichée diminue à mesure que l'angle de perspective augmente ; et
déplacer un élément d'interface utilisateur ayant actuellement le focus (522) hors de ladite zone ayant le focus (524) et déplacer un élément d'interface utilisateur voisin (512) dans ladite zone ayant le focus (524) lorsque les éléments d'interface utilisateur (512) de ladite première pluralité d'éléments d'interface utilisateur (512) sont déplacés d'un pas dans ladite direction de défilement souhaitée (550L) le long dudit trajet prédéfini (510).

2. Appareil électronique selon la revendication 1, dans lequel lesdits moyens de commande sont en outre destinés à présenter lesdits éléments d'interface utilisateur en tant qu'objets image sur ledit affichage (203) .

3. Appareil électronique selon la revendication 1, dans lequel le trajet prédéfini (510) est symétrique par rapport à la zone ayant le focus (524).

4. Appareil électronique selon la revendication 1, dans lequel le trajet prédéfini (510) est courbé.

5. Appareil électronique selon la revendication 1, dans lequel les moyens de commande sont en outre destinés à recevoir une entrée de défilement indiquant une direction et, en réponse à celle-ci, à faire défiler tous les éléments d'interface utilisateur (512) dans la direction indiquée et à supprimer l'élément d'interface utilisateur le plus éloigné dans la direction indiquée et à introduire un élément d'interface utilisateur à la fin des éléments d'interface utilisateur dans une direction opposée à la direction indiquée.

6. Appareil électronique selon la revendication 1, dans lequel l'interface utilisateur graphique comprend en outre une région de description (540) sur lesdits moyens d'affichage (203), et
les moyens de commande étant en outre destinés à présenter des informations de description sur un élément d'interface utilisateur se trouvant actuellement dans ladite zone ayant le focus (524) dans la région de description (540).

7. Appareil électronique selon la revendication 6, dans lequel les moyens de commande sont destinés à présenter ladite région de description sur une partie inférieure desdits moyens d'affichage (203), sous une partie centrale des moyens d'affichage (203).

8. Appareil électronique selon la revendication 6, dans lequel les informations de description présentées dans la région de description (540) comprennent des premières informations servant à expliquer une fonctionnalité de l'élément d'interface utilisateur ayant le focus (512) à exécuter lors de la sélection.

9. Appareil électronique selon la revendication 1, dans lequel les moyens de commande sont en outre destinés à présenter des informations servant à indiquer une position hiérarchique de l'élément d'interface utilisateur ayant le focus dans une structure à plusieurs niveaux.

10. Procédé de fourniture d'une interface utilisateur graphique pour donner à un utilisateur d'un appareil électronique (100) l'accès à des éléments d'interface sélectionnables par l'utilisateur (512), l'appareil électronique (100) ayant un affichage (203) et des moyens d'entrée (210), le procédé comprenant :
la présentation d'une pluralité d'éléments d'interface utilisateur (512) le long d'un trajet prédéfini (510) sur l'affichage (203) dans l'interface utilisateur graphique, l'interface utilisateur graphique ayant une zone ayant le focus (524) ;
le défilement des éléments d'interface utilisateur de ladite pluralité d'éléments d'interface utilisateur (512) dans une première direction (550L) ou une seconde direction (550R) le long dudit trajet prédéfini (510) en réponse à une entrée utilisateur sur lesdits moyens d'entrée (210 ; 310 ; 438), laquelle indique une desdites première et seconde directions comme direction de défilement souhaitée ;
la présentation de l'élément d'interface utilisateur (512) actuellement dans la zone ayant le focus (524) en vue de face avec un angle de perspective nul, où l'angle de perspective est un angle de rotation entre une vue de face et une vue de côté ;
la présentation des éléments d'interface utilisateur (512) autres que l'élément d'interface utilisateur dans la zone ayant le focus (524) dans des vues en perspective à l'extérieur de ladite zone ayant le focus (524) et à l'intérieur de ladite interface utilisateur graphique, où l'angle de perspective des éléments d'interface utilisateur augmente à mesure que la distance à la zone ayant le focus (524) augmente et où la taille d'un élément d'interface utilisateur affichée diminue à mesure que l'angle de perspective augmente ; et
le déplacement d'un élément d'interface utilisateur ayant actuellement le focus (522) hors de ladite zone ayant le focus (524) et le déplacement d'un élément d'interface utilisateur voisin (512) dans ladite zone ayant le focus (524) lorsque les éléments d'interface utilisateur (512) de ladite première pluralité d'éléments d'interface utilisateur (512) sont déplacés d'un pas dans ladite direction de défilement souhaitée (550L) le long dudit trajet prédéfini (510).

11. Procédé selon la revendication 10, comprenant la présentation desdits éléments d'interface utilisateur en tant qu'objets image sur ledit affichage (203).

12. Procédé selon la revendication 10, dans lequel le trajet prédéfini (510) est symétrique par rapport à la zone ayant le focus (524).

13. Procédé selon la revendication 10, dans lequel le trajet prédéfini (510) est courbé.

14. Produit programme informatique destiné à donner à l'utilisateur d'un appareil électronique accès à des éléments d'interface sélectionnables par l'utilisateur, le produit programme informatique comprenant un code de programme pour :
présenter une pluralité d'éléments d'interface utilisateur (512) le long d'un trajet prédéfini (510) sur un affichage (203) dans une interface utilisateur graphique, l'interface utilisateur graphique ayant une zone ayant le focus (524) ;
faire défiler les éléments d'interface utilisateur de ladite pluralité d'éléments d'interface utilisateur (512) dans une première direction (550L) ou une seconde direction (550R) le long dudit trajet prédéfini (510) en réponse à une entrée utilisateur sur des moyens d'entrée (210 ; 310 ; 438), laquelle indique une desdites première et seconde directions comme direction de défilement souhaitée ;
présenter l'élément d'interface utilisateur (512) actuellement dans la zone ayant le focus (524) en vue de face avec un angle de perspective nul, où l'angle de perspective est un angle de rotation entre une vue de face et une vue de côté ;
présenter des éléments d'interface utilisateur (512) autres que l'élément d'interface utilisateur dans la zone ayant le focus (524) dans des vues en perspective à l'extérieur de ladite zone ayant le focus (524) et à l'intérieur de ladite interface utilisateur graphique, où l'angle de perspective des éléments d'interface utilisateur augmente à mesure que la distance à la zone ayant le focus (524) augmente et où la taille d'un élément d'interface utilisateur affichée diminue à mesure que l'angle de perspective augmente ; et pour déplacer un élément d'interface utilisateur ayant actuellement le focus (522) hors de ladite zone ayant le focus (524) et déplacer un élément d'interface utilisateur voisin (512) dans ladite zone ayant le focus (524) lorsque les éléments d'interface utilisateur (512) de ladite première pluralité d'éléments d'interface utilisateur (512) sont déplacés d'un pas dans ladite direction de défilement souhaitée (550L) le long dudit trajet prédéfini (510).

15. Produit programme informatique selon la revendication 14, comprenant un code de programme pour présenter lesdits éléments d'interface utilisateur en tant qu'objets image sur ledit affichage (203).
